# EUROPÄISCHE PATENTSCHRIFT

(11) **EP 2 683 560 B1**
(45) Veröffentlichungstag und Bekanntmachung des Hinweises auf die Patenterteilung: **08.04.2015**
(21) Anmeldenummer: 12705113.4
(22) Anmeldetag: 17.02.2012
(51) Int. Cl.: B60C 11/00

(54) **FAHRZEUGLUFTREIFEN**
VEHICLE TIRE
PNEU POUR VÉHICULE

(30) Priorität: 07.03.2011 DE 102011001133
(43) Veröffentlichungstag der Anmeldung: 15.01.2014
(73) Patentinhaber: Continental Reifen Deutschland GmbH, 30165 Hannover (DE)
(72) Erfinder: WEBER, Christian, 30826 Garbsen (DE); LUDWIG, Reinhard, 31848 Bad Münder (DE); VOLK, Heiner, 31535 Neustadt (DE)
(74) Vertreter: Preusser, Andrea
(86) Internationale Anmeldenummer: PCT/EP2012/052744
(87) Internationale Veröffentlichungsnummer: WO 2012/119844

(56) Entgegenhaltungen:
- DE-A1-102005 045 000
- JP-A- 2005 263 175
- JP-A- 2009 286 317

## Beschreibung

Die Erfindung betrifft einen Fahrzeugluftreifen, insbesondere für Nutzfahrzeuge, mit einer Radialkarkasse, einem mehrlagigen Gürtel und einem Laufstreifen, welcher sich in radialer Richtung aus zwei aus unterschiedlichen Gummimischungen bestehenden Schichten, einer Laufstreifencap und einer Laufstreifenbase, zusammensetzt, wobei die Laufstreifenbase in axialer Richtung betrachtet zumindest nach radial außen weisend einen zentralen Abschnitt und zwei seitliche Abschnitte aufweist.

Es ist üblich, Fahrzeugluftreifen, und zwar sowohl Reifen für Personenkraftwagen als auch für Nutzfahrzeuge, mit einem zweiteiligen Laufstreifen zu versehen, welcher aus einer Laufstreifencap, die beim Abrollen des Reifens mit dem Untergrund in Kontakt tritt, und aus einer Laufstreifenbase besteht. Die Laufstreifencap wird aus einer hinsichtlich des Abriebs optimierten Gummimischung und die Laufstreifenbase aus einer hinsichtlich der Hysterese optimierten Gummimischung gefertigt. Die Laufstreifenbase beeinflusst neben dem Rollwiderstand eines Reifens auch dessen Handlingverhalten (Fahrverhalten auf der Straße), wobei die Optimierung der einen Eigenschaft zu Lasten der anderen geht.

Fahrzeugluftreifen der eingangs genannten Art mit einer zusätzlichen Aufteilung der Laufstreifenbase in über die axiale Breite unterschiedliche Bereiche sind aus dem Stand der Technik bekannt. Die Aufteilung der Base wird dazu genutzt, die Eigenschaften des Reifens noch besser an die geforderten Bedingungen anzupassen.

In der DE 10 2006 012 536 A1 wird beispielsweise ein Fahrzeugluftreifen, insbesondere ein Nutzfahrzeugreifen beschrieben, der zur Verbesserung der Gürtelhaltbarkeit und zur Verringerung des Rollwiderstandes eine geteilte Laufstreifenbase aufweist, die in den seitlichen Abschnitten aus einen Mischung mit einer höheren Wärmeleitfähigkeit gebildet wird. Die Wärmeleitfähigkeit dieser Mischung ist höher als die der Laufstreifencap und die des zentralen Abschnitts der Laufstreifenbase.

Die JP 2005263175 A beschreibt einen Reifen, der eine in axialer Richtung geteilte Laufstreifenbase aufweist, wobei die Hystereseeigenschaften nicht beschrieben werden. In der JP 2009286317 A wird ein Reifen offenbart, dessen Laufstreifenbase geteilt ist und Schultersegmente mit einem niedrigeren dynamischen Elastizitätsmodul als dem mittleren Segment aufweist. Ein derartiger Reifen soll gut hinsichtlich der Anforderungen eines geringen Spritverbrauchs und des Abriebs ausbalanciert sein, wobei die Hochgeschwindigkeitsfestigkeit, die Bremseigenschaft sowie die Lenkstabilität nicht verschlechtert werden sollen. Die DE 102005045000 A1 offenbart einen Fahrzeugluftreifen, dessen Laufstreifenbase in axialer Richtung geteilt ist, wobei der zentrale Bereich der Base eine höhere Hysterese aufweist als die seitlichen Bereiche. Ein derartiger Fahrzeugluftreifen soll eine Verbesserung hinsichtlich des Nassgriffs und generell der Winterperformance erzielen.

Aus der DE 198 50 766 A1 ist es bekannt, den Rollwiderstand eines Fahrzeugluftreifens zu verbessern, indem man die Laufstreifenbase in der Mitte weicher und in den seitlichen Bereichen härter ausgestaltet, wobei die äußeren Abschnitte hysteresereicher, d. h. mit kleinerer Rückprallelastizität, ausgebildet sind. Bei Fahrzeugluftreifen mit einem derartigen Aufbau der Laufstreifenbase hat sich allerdings herausgestellt, dass das Handlingverhalten des Reifens beeinträchtigt wird.

Der Erfindung liegt daher die Aufgabe zugrunde, bei einem Reifen der eingangs genannten Art den Rollwiderstand zu senken und gleichzeitig das Handlingverhalten nicht negativ zu beeinflussen.

Gelöst wird die gestellte Aufgabe erfindungsgemäß dadurch, dass die beiden seitlichen Abschnitte aus einer Gummimischung bestehen, die einen geringeren dynamischen Elastizitätsmodul E' bei 55 °C gemäß DIN 53513 (gemessen bei 8 % Dehnung) und eine geringere Hysterese aufweist als der zentrale Abschnitt der Laufstreifenbase.

Es wurde überraschend festgestellt, dass das Handlingverhalten des Reifens im Wesentlichen durch den zentralen Abschnitt der Laufstreifenbase bestimmt wird, der dann so ausgebildet ist, dass die Gummimischung dieses Abschnitts einen hohen Elastizitätsmodul und damit verbunden eine hohe Härte/Steifigkeit aufweist. Dies unterstützt die Schräglaufsteifigkeit, welche als Maß für das Handlingverhalten des Reifens herangezogen wird. Gleichzeitig können die seitlichen Abschnitte der Laufstreifenbase im Hinblick auf eine niedrigen Rollwiderstand dadurch optimiert werden, dass in diesen Abschnitten eine Gummimischung zum Einsatz kommt, die einen geringen Elastizitätsmodul und eine geringe Hysterese aufweist. FEM-Berechnungen haben gezeigt, dass durch die erfindungsgemäße Ausbildung der Laufstreifenbase der Zielkonflikt zwischen Rollwiderstand und Handlingverhalten auf einem höheren Niveau gelöst werden kann.

Die Laufstreifenbase kann gemäß der Erfindung unterschiedlich aufgebaut sein, wichtig ist nur, dass sie in axialer Richtung betrachtet zumindest nach radial außen weisend einen zentralen Abschnitt und zwei seitliche Abschnitte aufweist. Die Mischungen für den zentralen Abschnitt und die seitlichen Abschnitte können sich jeweils über die gesamte Stärke (Dicke) der Laufstreifenbase erstrecken, wobei die Mischungen für die beiden seitlichen Abschnitte auch auf unterschiedlichen Mischungen, abgestimmt auf Innen- und Außenseite des Reifens, basieren können. Die Mischung des zentralen Abschnitts kann sich dabei aber auch unterhalb der seitlichen Abschnitte bis zum Rand der Laufstreifenbase erstrecken. Es ist auch möglich, dass sich die Mischung für die seitlichen Abschnitte unterhalb des mittleren Abschnitts entlang erstreckt. Auch teilweise Erstreckungen der einzelnen Abschnitte unterhalb der jeweils anderen Abschnitte sind möglich.

Es ist auch möglich, dass die Laufstreifenbase zwischen dem zentralen Abschnitt und den seitlichen Abschnitten weitere Bereiche mit noch anderen Mischungen aufweist. So ist beispielsweise ein Aufbau der Laufstreifenbase aus einem zentralen Abschnitt, sich daran anschließenden Zwischenabschnitten und dann äußeren seitlichen Abschnitten möglich. Die Zwischenabschnitte können dabei so ausgebildet sein, dass der Mischungsübergang zwischen dem zentralen Abschnitt und den seitlichen Abschnitten "weicher" ausfällt, was Vorteile in Bezug auf die Reifenhaltbarkeit ergeben kann.

Um den größten Effekt hinsichtlich Rollwiderstand und Handlingverhalten zu erzielen, ist man erfindungsgemäß bestrebt, die zentralen Abschnitt der Laufstreifenbase möglichst steif und die seitlichen Abschnitte möglichst weich mit geringer Hysterese einzustellen. Sowohl sehr hohe Steifigkeiten als auch sehr niedrige Hysteresewerte führen allerdings zu einer schlechten Rissbeständigkeit der Mischungen. Auch zu große Sprünge in der Steifigkeit innerhalb der Laufstreifenbase können zu Problemen in der Reifenhaltbarkeit führen. Diese Aspekte bilden die Grundlage für die folgenden bevorzugten Weiterbildungen der Erfindung.

Gemäß einer vorteilhaften Weiterbildung der Erfindung beträgt der dynamische Elastizitätsmodul E' bei 55 °C gemäß DIN 53513 (gemessen bei 8 % Dehnung) der Gummimischung der beiden seitlichen Abschnitte 35 bis 80 %, bevorzugt 40 bis 75 %, besonders bevorzugt 50 bis 70 %, des dynamischen Elastizitätsmoduls E' bei 55 °C gemäß DIN 53513 (gemessen bei 8 % Dehnung) der Gummimischung des zentralen Abschnittes der Laufstreifenbase. Auf diese Weise können besonders gute Ergebnisse im Hinblick auf das Handling erzielt werden, wobei gleichzeitig die äußeren Abschnitte mit der geringen Steifigkeit eine ausreichende Rissbeständigkeit in den stark beanspruchten, axial äußeren Bereichen (Reifenschultern) des Reifenlaufstreifens aufweisen.

Erfindungsgemäße Bereiche für den dynamischen Elastizitätsmodul E' bei 55 °C gemäß DIN 53513 (gemessen bei 8 % Dehnung) für die Gummimischung der beiden seitlichen Abschnitte können dabei beispielsweise 2,3 bis 6,3 N/mm², bevorzugt 2,9 bis 5,7 N/mm², besonders bevorzugt 3,4 bis 5,1 N/mm², betragen.

Die Gummimischung des zentralen Abschnitts weist vorzugsweise einen dynamischen Elastizitätsmodul E' bei 55 °C gemäß DIN 53513 (gemessen bei 8 % Dehnung) von 5,1 bis 9,1 N/mm², bevorzugt 6,3 bis 8,6 N/mm², besonders bevorzugt 6,3 bis 7,5 N/mm², auf.

Um Reifen mit einem besonders niedrigen Rollwiderstand zu erhalten, hat es sich als vorteilhaft erwiesen, wenn der Verlustfaktor tan δ bei 55 °C gemäß DIN 53 513 (Maximalwert zwischen 0 und 12 % Dehnung) der Gummimischung der beiden seitlichen Abschnitte 10 bis 70 %, vorzugsweise 15 bis 60 %, besonders bevorzugt 20 bis 50 %, des Verlustfaktors tan δ bei 55 °C gemäß DIN 53 513 (Maximalwert zwischen 0 und 12 % Dehnung) der Gummimischung des zentralen Abschnittes der Laufstreifenbase beträgt.

Die Werte des Verlustfaktors tan δ bei 55 °C gemäß DIN 53 513 (Maximalwert zwischen 0 und 12 % Dehnung) der Gummimischung der beiden seitlichen Abschnitte können dabei zwischen 0,02 und 0,12, bevorzugt zwischen 0,025 und 0,12, besonders bevorzugt zwischen 0,035 und 0,09, liegen. Auf diese Weise werden Reifen mit besonders niedrigem Rollwiderstand erhalten.

Für die Gummimischung des zentralen Abschnitts haben sich Werte von 0,1 bis 0,3, bevorzugt 0,13 bis 0,25, besonders bevorzugt 0,14 bis 0,2, als vorteilhaft für ein besonders gutes Handling ergeben.

Gemäß einer vorteilhaften Weiterbildung der Erfindung beträgt die Breite des zentralen Abschnittes der Laufstreifenbase 20 bis 80 %, vorzugsweise 40 bis 70 %, der Gesamtbreite der Laufstreifenbase. Mit diesen Breiten werden die besten Effekte im Hinblick auf ein gutes Handlingverhalten bei niedrigem Rollwiderstand erzielt.

Um ein Optimum hinsichtlich Stärke der Laufstreifenbase, entsprechend der Menge an verwendeter Mischung, und der Verbesserung des Rollwiderstandes bei zumindest gleichbleibendem Handlingverhalten zu erzielen, hat es sich als vorteilhaft erwiesen, wenn die Laufstreifenbase eine Stärke von 0,5 bis 5 mm, vorzugsweise 0,7 bis 3 mm, besonders bevorzugt 0,8 bis 2 mm, aufweist. Bei hoher Stärke der Laufstreifenbase kann ein maximaler Effekt hinsichtlich des Handlingverhaltens bei niedrigem Rollwiderstand erzielt werden, allerdings besteht bei zunehmender Stärke der Laufstreifenbase die Gefahr, dass die Mischungen der Laufstreifenbase am Ende des Reifenlebens in Kontakt mit der Straße kommen, was zu schlechtem Nass- und Trockenbremsverhalten und verstärktem Abrieb führen kann.

Die Hysterese und der Elastizitätsmodul der Gummimischungen für die unterschiedlichen Abschnitte der Laufstreifenbase können auf unterschiedliche Weise beeinflusst werden. So kann beispielsweise durch spezielle Kautschuke, spezielle Vernetzungssysteme, den Füllstoffgehalt, beispielsweise den Rußgehalt, und/oder die Anbindung des Füllstoffs an die umgebende Kautschukmatrix Einfluss auf die Hysterese und den Elastizitätsmodul genommen werden.

Gemäß einer bevorzugten Ausgestaltung der Erfindung weist die Gummimischung der beiden seitlichen Abschnitte einen Füllstoffgehalt von weniger als 50 phr und die Gummimischung des zentralen Abschnitts einen Füllstoffgehalt von mehr als 55 phr auf. Mit weniger als 50 phr Füllstoffgehalt erreicht man eine geringe Hysterese, mehr als 55 phr Füllstoffgehalt führen zu hoher Steifigkeit. Als Füllstoffe können dabei z. B. Ruß und/oder Kieselsäure, die auch für Laufstreifencapmischungen üblich sind, zum Einsatz kommen.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Die Gummimischungen für die Abschnitte der Laufstreifenbase basieren in der Regel auf Dienkautschuken. Zu den Dienkautschuken zählen alle Kautschuke mit einer ungesättigten Kohlenstoffkette, die sich zumindest teilweise von konjugierten Dienen ableiten. Eingesetzt werden häufig Naturkautschuk (NR), synthetisches Polyisopren (IR), Polybutadien (BR), Styrol-Butadien-Copolymer (SBR). Diese Dienelastomere lassen sich gut verarbeiten und ergeben in den vulkanisierten Reifen gute Reifeneigenschaften.

Zur Beeinflussung der Hysterese sowohl der Gummimischung der seitlichen Abschnitte als auch der Gummimischung des zentralen Abschnitts hat sich als vorteilhaft erwiesen, Polymere mit einer Glasübergangstemperatur von weniger als -55 °C einzusetzen. Unter diese Polymere fallen beispielsweise Naturkautschuk (NR) oder Polybutadien (BR), die auch im Verschnitt eingesetzt werden können.

Die Gummimischungen können neben Kautschuk und Füllstoffen weitere übliche Zuschlagstoffe in üblichen Gewichtsteilen enthalten. Zu diesen Zuschlagstoffen zählen Weichmacher, Silan-Kupplungsagenzien, Alterungsschutzmittel, wie z. B. N-Phenyl-N'-(1,3-dimethylbutyl)-p-phenylendiamin (6PPD), N-Isopropyl-N'-phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind, Aktivatoren, wie z. B. Zinkoxid und Fettsäuren (z. B. Stearinsäure), Wachse, Harze und Mastikationshilfsmittel, wie z. B. 2,2'-Dibenzamidodiphenyldisulfid (DBD).

Die Mischungen werden mit Schwefel und/oder Schwefelspendern in Anwesenheit von Vulkanisationsbeschleunigern vernetzt.

Die Herstellung der erfindungsgemäßen Fahrzeugluftreifen erfolgt nach üblichen, dem Fachmann bekannten Verfahren, wobei der Laufstreifen mit der erfindungsgemäßen Ausgestaltung mit entsprechenden Extrudern und Extrudermundstücken erzeugt und auf den Reifenrohling aufgelegt wird. Auch ein Verfahren, bei dem ein schmaler Mischungsstreifen zur Erzeugung des Laufstreifens auf den Rohling aufgespult wird, ist einsetzbar. Beim Aufspulen wird dann zwischen den unterschiedlichen Mischungen für die seitlichen Abschnitte und den zentralen Abschnitt gewechselt.

Bei den erfindungsgemäßen Fahrzeugluftreifen kann es sich sowohl um PKW- als auch um Nutzfahrzeugreifen handeln.

Die Erfindung soll nun anhand der Figur und den Tabelle 1 bis 3 näher erläutert werden.

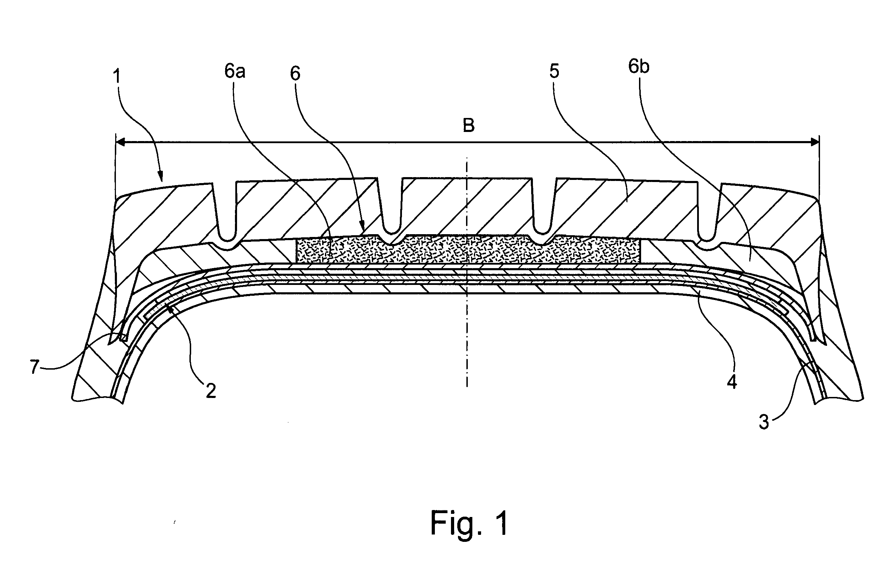

Die einzige Zeichnungsfigur, Fig. 1, zeigt schematisch einen Querschnitt durch den Laufstreifenbereich eines erfindungsgemäßen Fahrzeugluftreifens.

Fig. 1 zeigt von den üblichen Bauteilen eines Luftreifens für PKW einen Laufstreifen 1, einen Gürtel 2 mit vorzugsweise zwei Gürtellagen bestehend aus in Gummi eingebetteten, vorzugsweise aus Stahlkord bestehenden Festigkeitsträgern, einer ebenfalls mit Festigkeitsträgern verstärkten Radialkarkasse 3 und einer luftdichten Innenschicht 4. Der Gürtel 2 ist von einer so genannten Gürtelbandage 7 aus gummierten textilen Festigkeitsträgern abgedeckt. Von den Seitenwänden des Reifens sind lediglich die axial äußeren Endabschnitte dargestellt. Nicht gezeigt sind die Wulstbereiche mit Wulstkernen und Kernprofilen.

Der Laufstreifen 1 besteht aus einer radial äußeren Gummischicht, der Laufstreifencap 5 und einer radial inneren Gummischicht, der Laufstreifenbase 6. Unterhalb der Laufstreifenbase 6 kann noch eine nicht dargestellte Unterplatte vorgesehen werden. Die Laufstreifenbase 6 weist eine im Wesentlichen konstante Stärke von ca. 2 mm auf und ist in axialer Richtung dreigeteilt, sodass sie aus einem zentralen Abschnitt 6a und zwei seitlichen Abschnitten 6b besteht. Der zentrale Abschnitt 6a erstreckt sich zentrisch zur Reifenmitte über ca. 50 % der Gesamtbreite der Laufstreifenbase 6. Die beiden seitlichen Abschnitte 6b sind bei der dargestellten Ausführungsform gleich breit und symmetrisch zur Reifenmitte angeordnet. Zwischen dem Grund der Umfangsrillen und der Laufstreifenbase 6 befindet sich noch eine dünne Schicht aus der Gummimischung der Laufstreifencap 5, was durch den Einformungs- und Vulkanisiervorgang, bei dem der Reifenrohling in die Form gedrückt wird, bedingt ist. In der Figur 1 ist der Übergang zwischen den seitlichen Abschnitten 6b und dem zentralen Abschnitt 6a schematisch als vertikale Linie dargestellt. Es sind aber auch "weichere" Übergänge zwischen den Abschnitten durch diagonale Übergänge möglich. Dabei überlappen vorzugsweise die seitlichen Abschnitte 6b den zentralen Abschnitt 6a nach radial außen.

Die beiden seitlichen Abschnitte 6b bestehen aus einer Gummimischung mit einem geringeren dynamischen Elastizitätsmodul E' bei 55 °C gemäß DIN 53513 (gemessen bei 8 % Dehnung) als die Gummimischung des zentralen Abschnitts 6a. Auch weist die Mischung der seitlichen Abschnitte 6b eine geringe Hysterese als die des zentralen Abschnitts 6a auf.

Die Tabelle 1 zeigt FEM-Berechnungen für die Anordnung von Mischungen mit unterschiedlichem Elastizitätsmodul und unterschiedlicher Hysterese in den unterschiedlichen Bereichen der Laufstreifenbase mit den daraus resultierenden prozentualen Werten für den Rollwiderstand und die Schräglaufsteifigkeit, wobei die Werte für den Rollwiderstand und die Schräglaufsteifigkeit mit einer Laufstreifenbase aus einer einheitlichen Mischung gleich 100 % gesetzt wurden. Werte größer 100 % bedeuten eine Verbesserung der entsprechenden Eigenschaft. Für die FEM-Berechnungen wurden die Elastizitätmoduli E verwendet, wobei bei deren Bestimmung die Spannungs-Dehnungskurven so angepasst sind, dass viskose Effekte ausgeschlossen werden. Es werden rein elastische Spannungs-Dehnungskurven herangezogen.

**Tabelle 1**

| Mischung des zentralen Abschnitts 6a | Mischung der seitlichen Abschnitte 6b | Rollwiderstand [%] | Schräglaufsteifigkeit [%] |
|---|---|---|---|
| **A** | **A** | 100 | 100 |
| **B** | **B** | 102,4 | 99,7 |
| **B** | **C** | 104,8 | 99,4 |
| **B** | **D** | 105,9 | 99,1 |
| **C** | **C** | 104,8 | 97,3 |

| | | | |
|---|---|---|---|
| Mit Mischung A: Elastizitätsmodul (ohne viskose Effekte) E = 6,29 N/mm² (E' = 7,2 N/mm², tan δ = 0,22) Mischung B: Elastizitätsmodul (ohne viskose Effekte) E = 5,98 N/mm² (E' = 6,9 N/mm², tan δ = 0,15) Mischung C: Elastizitätsmodul (ohne viskose Effekte) E = 4,09 N/mm² (E' = 4,5 N/mm², tan δ = 0,07) Mischung D: Elastizitätsmodul (ohne viskose Effekte) E = 3,15 N/mm² (E' = 3,6 N/mm², tan δ = 0,044) | | | |

Aus der Tabelle 1 wird ersichtlich, dass sich die besten Ergebnisse hinsichtlich reduziertem Rollwiderstand und möglichst gleichbleibender Schräglaufsteifigkeit erzielen lassen, wenn für den zentralen Abschnitt 6a Mischungen mit hohem Elastizitätsmodul und in den seitlichen Abschnitten 6b Mischungen mit einem niedrigeren Elastizitätsmodul eingesetzt werden. Dies zeigen die Kombinationen von Mischung B im zentralen Abschnitt 6a mit den Mischungen C oder D in den seitlichen Abschnitten 6b.

Ferner wurden Reifen der Dimension 205/55R16 gebaut, wobei die Mischungen für den zentralen Abschnitt 6a (Mischung 1) und die seitlichen Abschnitte 6b (Mischung 2) der Laufstreifenbase, die in der Tabelle 2 angegebenen Zusammensetzungen und Materialeigenschaften aufwiesen. Bei den Reifen erstreckte sich der zentrale Abschnitt 6a über 50 % der Gesamtbreite der Laufstreifenbase.

Es wurden auch Reifen derselben Dimension gefertigt, bei denen die Laufstreifenbase vollständig zum einen vollständig aus der Mischung 1 und zum anderen vollständig aus der Mischung 2 gebildet wurde. Die Ergebnisse der mit diesen Reifen durchgeführten Reifenversuche sind in Tabelle 3 dargestellt, wobei die Werte für die Schräglaufsteifigkeit und den Rollwiderstand des Reifens mit der Mischung 1 als Laufstreifenbase gleich 100 % gesetzt wurden. Werte größer 100 % bedeuten eine Verbesserung der entsprechenden Eigenschaft.

Die Mischungsherstellung erfolgte unter üblichen Bedingungen unter Herstellung einer Grundmischung und anschließend der Fertigmischung in einem Labortangentialmischer. Es wurden die Mooney-Viskositäten ML (1+4) bei 100 °C mit Hilfe eines rotorlosen Vulkameters (MDR = Moving Disc Rheometer) gemäß DIN 53 523 ermittelt. Aus sämtlichen Mischungen wurden Prüfkörper durch optimale Vulkanisation unter Druck bei 160 °C hergestellt und mit diesen Prüfkörpern für die Kautschukindustrie typische Materialeigenschaften mit den im Folgenden angegebenen Testverfahren ermittelt.
- Shore-A-Härte bei Raumtemperatur und 70 °C gemäß DIN 53 505
- Rückprallelastizität bei Raumtemperatur und 70 °C gemäß DIN 53 512
- Zugfestigkeit bei Raumtemperatur gemäß DIN 53 504
- Reißdehnung bei Raumtemperatur gemäß DIN 53 504
- Spannungswert (Modul) bei 300 % Dehnung bei Raumtemperatur gemäß DIN 53 504
- dynamischer Elastizitätsmodul E' bei 55 °C gemäß DIN 53 513 bei 8% Dehnung
- Verlustfaktor tan δ bei 55°C aus dynamisch-mechanischer Messung gemäß DIN 53 513 als Maximalwert zwischen 0 und 12 % Dehnung

**Tabelle 2**

| **Bestandteile** | **Einheit** | **Mischung 1 für zentralen Abschnitt 6a** | **Mischung 2 für seitliche Abschnitte 6b** |
|---|---|---|---|
| Naturkautschuk | phr | 70 | 100 |
| BR^{a} | phr | 30 | - |
| Ruß N339 | phr | 75 | 25 |
| Kieselsäure | phr | | 5 |
| Weichmacheröl | phr | 15 | 4 |
| Alterungsschutzmittel | phr | 4 | 4 |
| Ozonschutzwachs | phr | 1 | 1 |
| Klebharz | phr | 4 | 2 |
| Stearinsäure | phr | 2 | 2 |
| Zinkoxid | phr | 3 | 3 |
| Beschleuniger | phr | 2,5 | 2 |
| Schwefel | phr | 2,5 | 2 |
| **Eigenschaften** | | | |
| Härte bei RT | ShoreA | 73 | 55 |
| Härte bei 70 °C | ShoreA | 67 | 49 |
| Rückprallelast. bei RT | % | 37 | 61 |
| Rückprallelast. bei 70 °C | % | 50 | 73 |
| Zugfestigkeit bei RT | MPa | 16 | 16 |
| Reißdehnung bei RT | % | 330 | 450 |
| Spannungswert 300 % | MPa | 15 | 9 |
| E' | N/mm² | 7,2 | 4,0 |
| tan δ | - | 0,22 | 0,04 |

| | | | |
|---|---|---|---|
| ^{a}High-cis Polybutadien | | | |

**Tabelle 3**

| | Reifen mit Mischung 1 als Laufstreifenbase | Reifen mit Mischung 2 als Laufstreifenbase | Reifen mit Mischung 1 im zentralen Abschnitt und Mischung 2 in den seitlichen Abschnitten |
|---|---|---|---|
| Schräglaufsteifigkeit | 100 | 94 | 99 |
| Rollwiderstand | 100 | 106 | 106 |

Die erfindungsgemäßen Reifen zeichnen sich durch einen verbesserten Rollwiderstand aus, wobei das Handlingverhalten nicht merklich eingeschränkt wurde.

## Patentansprüche

1. Fahrzeugluftreifen mit einer Radialkarkasse (3), einem wenigstens einlagigen Gürtel (2) und einem Laufstreifen (1), welcher sich in radialer Richtung aus zwei aus unterschiedlichen Gummimischungen bestehenden Schichten, einer Laufstreifencap (5) und einer Laufstreifenbase (6), zusammensetzt, wobei die Laufstreifenbase (6) in axialer Richtung betrachtet zumindest nach radial außen weisend einen zentralen Abschnitt (6a) und zwei seitliche Abschnitte (6b) aufweist,
**dadurch gekennzeichnet,**
**dass** die beiden seitlichen Abschnitte (6b) aus einer Gummimischung bestehen, die einen geringeren dynamischen Elastizitätsmodul E' bei 55 °C gemäß DIN 53513 (gemessen bei 8 % Dehnung) und eine geringere Hysterese aufweist als der zentrale Abschnitt (6a) der Laufstreifenbase (6).

2. Fahrzeugluftreifen nach Anspruch 1, **dadurch gekennzeichnet, dass** der dynamische Elastizitätsmodul E' bei 55 °C gemäß DIN 53513 (gemessen bei 8 % Dehnung) der Gummimischung der beiden seitlichen Abschnitte (6b) 35 bis 80 % des dynamischen Elastizitätsmoduls E' bei 55 °C gemäß DIN 53513 (gemessen bei 8 % Dehnung) der Gummimischung des zentralen Abschnittes (6a) der Laufstreifenbase (6) beträgt.

3. Fahrzeugluftreifen nach einem der Ansprüche 1 bis 2, **dadurch gekennzeichnet, dass** der dynamische Elastizitätsmodul E' bei 55 °C gemäß DIN 53513 (gemessen bei 8 % Dehnung) der Gummimischung der beiden seitlichen Abschnitte (6b) einen Wert von 2,3 bis 6,3 N/mm² aufweist.

4. Fahrzeugluftreifen nach einem der Ansprüche 1 bis 3, **dadurch gekennzeichnet, dass** der dynamische Elastizitätsmodul E' bei 55 °C gemäß DIN 53513 (gemessen bei 8 % Dehnung) der Gummimischung des zentralen Abschnittes (6a) einen Wert von 5,1 bis 9,1 N/mm² aufweist.

5. Fahrzeugluftreifen nach Anspruch 1 oder 4, **dadurch gekennzeichnet, dass** der Verlustfaktor tan δ bei 55 °C gemäß DIN 53 513 (Maximalwert zwischen 0 und 12 % Dehnung) der Gummimischung der beiden seitlichen Abschnitte (6b) 10 bis 70 % des Verlustfaktors tan δ bei 55 °C gemäß DIN 53 513 (Maximalwert zwischen 0 und 12 % Dehnung) der Gummimischung des zentralen Abschnittes (6a) der Laufstreifenbase (6) beträgt.

6. Fahrzeugluftreifen nach einem der Ansprüche 1 bis 5, **dadurch gekennzeichnet, dass** der Verlustfaktor tan δ bei 55 °C gemäß DIN 53 513 (Maximalwert zwischen 0 und 12 % Dehnung) der Gummimischung der beiden seitlichen Abschnitte (6b) einen Wert von 0,02 bis 0,12 aufweist.

7. Fahrzeugluftreifen nach einem der Ansprüche 1 bis 6, **dadurch gekennzeichnet, dass** der Verlustfaktor tan δ bei 55 °C gemäß DIN 53 513 (Maximalwert zwischen 0 und 12 % Dehnung) der Gummimischung des zentralen Abschnittes (6a) einen Wert von 0,1 bis 0,3 aufweist.

8. Fahrzeugluftreifen nach einem der Ansprüche 1 bis 7, **dadurch gekennzeichnet, dass** die Breite des zentralen Abschnittes (6a) der Laufstreifenbase (6) 20 bis 80 %, vorzugsweise 40 bis 70 %, der Gesamtbreite der Laufstreifenbase (6) beträgt.

9. Fahrzeugluftreifen nach einem der Ansprüche 1 bis 8, **dadurch gekennzeichnet, dass** die Laufstreifenbase eine Stärke von 0,5 bis 5 mm, vorzugsweise 0,7 bis 3 mm, aufweist.

10. Fahrzeugluftreifen nach einem der Ansprüche 1 bis 9, **dadurch gekennzeichnet, dass** die Gummimischung der beiden seitlichen Abschnitte (6b) einen Füllstoffgehalt von weniger als 50 phr und die Gummimischung des zentralen Abschnitts (6a) einen Füllstoffgehalt von mehr als 55 phr aufweist.

11. Fahrzeugluftreifen nach einem der Ansprüche 1 bis 10, **dadurch gekennzeichnet, dass** die Gummimischung der beiden seitlichen Abschnitte (6b) und des zentralen Abschnitts (6a) Polymere mit einer Glasübergangstemperatur Tg von weniger als -55 °C enthält.

## Claims

1. Pneumatic vehicle tire with a radial ply carcass (3), an at least single-layer belt (2) and a tread (1), which is comprised in the radial direction of two layers consisting of different rubber compounds, a tread cap (5) and a tread base (6), and the tread base (6) viewed in the axial direction has at least directed radially outward, a central segment (6a) and two lateral segments (6b), **characterized in that** the two lateral segments (6b) consist of a rubber compound that has a lower dynamic elastic modulus E' at 55°C according to DIN 53513 (measured at 8% extension) and a lower hysteresis than the central segment (6a) of the tread base (6).

2. Pneumatic vehicle tire according to Claim 1, **characterized in that** the dynamic elastic modulus E' at 55°C according to DIN 53513 (measured at 8% extension) of the rubber compound of the two lateral segments (6b) is 35 to 80% of the dynamic elastic modulus E' at 55°C according to DIN 53513 (measured at 8% extension) of the rubber compound of the central segment (6a) of the tread base (6).

3. Pneumatic vehicle tire according to one of Claims 1 and 2, **characterized in that** the dynamic elastic modulus E' at 55°C according to DIN 53513 (measured at 8% extension) of the rubber compound of the two lateral segments (6b) has a value from 2.3 to 6.3 N/mm².

4. Pneumatic vehicle tire according to one of Claims 1 to 3, **characterized in that** the dynamic elastic modulus E' at 55°C according to DIN 53513 (measured at 8% extension) of the rubber compound of the central segment (6a) has a value from 5.1 to 9.1 N/mm².

5. Pneumatic vehicle tire according to Claim 1 or 4, **characterized in that** the loss factor tan δ at 55°C according to DIN 53 513 (maximum value between 0 and 12% extension) of the rubber compound of the two lateral segments (6b) is 10 to 70% of the loss factor tan δ at 55°C according to DIN 53 513 (maximum value between 0 and 12% extension) of the rubber compound of the central segment (6a) of the tread base (6).

6. Pneumatic vehicle tire according to one of Claims 1 to 5, **characterized in that** the loss factor tan δ at 55°C according to DIN 53 513 (maximum value between 0 and 12% extension) of the rubber compound of the two lateral segments (6b) has a value from 0.02 to 0.12.

7. Pneumatic vehicle tire according to one of Claims 1 to 6, **characterized in that** the loss factor tan δ at 55°C according to DIN 53 513 (maximum value between 0 and 12% extension) of the rubber compound of the central segment (6a) has a value from 0.1 to 0.3.

8. Pneumatic vehicle tire according to one of Claims 1 to 7, **characterized in that** the width of the central segment (6a) of the tread base (6) is 20 to 80%, preferably 40 to 70%, of the total width of the tread base (6).

9. Pneumatic vehicle tire according to one of Claims 1 to 8, **characterized in that** the tread base has a thickness of 0.5 to 5 mm, preferably 0.7 to 3 mm.

10. Pneumatic vehicle tire according to one of Claims 1 to 9, **characterized in that** the rubber compound of the two lateral segments (6b) has a filler content of less than 50 phr and the rubber compound of the central segment (6a) has a filler content of more than 55 phr.

11. Pneumatic vehicle tire according to one of Claims 1 to 10, **characterized in that** the rubber compound of the two lateral segments (6b) and of the central segment (6a) contains polymers with a glass transition temperature Tg of less than -55°C.

## Revendications

1. Bandage pneumatique pour roue de véhicule présentant une carcasse radiale (3), une ceinture (2) en au moins deux couches et une bande de roulement (1) constituée dans la direction radiale de deux couches formées de mélanges différents de caoutchouc, d'un chapeau (5) de bande de roulement et d'une base (6) de bande de roulement,
la base (6) de bande de roulement présentant dans la direction axiale une partie centrale (6a) tournée radialement vers l'extérieur et deux parties latérales (6b),
**caractérisé en ce que**
les deux parties latérales (6b) sont constituées d'un mélange de caoutchouc qui présente un module d'élasticité dynamique E' à 55°C selon DIN 53513 (mesuré à un allongement de 8 %) plus bas et une hystérèse plus basse que la partie centrale (6a) de la base (6) de la bande de roulement.

2. Bandage pneumatique pour roue de véhicule selon la revendication 1, **caractérisé en ce que** le module d'élasticité dynamique E' à 55°C selon DIN 53513 (mesuré à un allongement de 8 %) du mélange de caoutchouc des deux parties latérales (6b) représente de 35 à 80 % du module d'élasticité dynamique E' à 55°C selon DIN 53513 (mesuré à un allongement de 8 %) du mélange de caoutchouc de la partie centrale (6a) de la base (6) de la bande de roulement.

3. Bandage pneumatique pour roue de véhicule selon l'une des revendications 1 et 2, **caractérisé en ce que** le module d'élasticité dynamique E' à 55°C selon DIN 53513 (mesuré à un allongement de 8 %) du mélange de caoutchouc des deux parties latérales (6b) présente une valeur de 2,3 à 6,3 N/mm².

4. Bandage pneumatique pour roue de véhicule selon l'une des revendications 1 à 3, **caractérisé en ce que** le module d'élasticité dynamique E' à 55°C selon DIN 53513 (mesuré à un allongement de 8 %) du mélange de caoutchouc de la partie centrale (6a) présente une valeur de 5,1 à 9,1 N/mm².

5. Bandage pneumatique pour roue de véhicule selon les revendications 1 ou 4, **caractérisé en ce que** le facteur de perte tan δ à 55°C selon DIN 53513 (valeur maximale à un allongement compris entre 0 et 12 %) du mélange de caoutchouc des deux parties latérales (6b) représente 10 à 70 % du facteur de perte tan δ selon DIN 53513 (valeur maximale à un allongement compris entre 0 et 12 %) du mélange de caoutchouc de la partie centrale (6a) de la base (6) de la bande de roulement.

6. Bandage pneumatique pour roue de véhicule selon l'une des revendications 1 à 5, **caractérisé en ce que** le facteur de perte tan δ à 55°C selon DIN 53513 (valeur maximale à un allongement compris entre 0 et 12 %) du mélange de caoutchouc des deux parties latérales (6b) présente une valeur de 0,02 à 0,12.

7. Bandage pneumatique pour roue de véhicule selon l'une des revendications 1 à 6, **caractérisé en ce que** le facteur de perte tan δ à 55°C selon DIN 53513 (valeur maximale à un allongement compris entre 0 et 12 %) du mélange de caoutchouc de la partie centrale (6a) présente une valeur comprise entre 0,1 et 0,3.

8. Bandage pneumatique pour roue de véhicule selon l'une des revendications 1 à 7, **caractérisé en ce que** la largeur de la partie centrale (6a) de la base (6) de la bande de roulement représente de 20 à 80 % et de préférence de 40 à 70 % de la largeur totale de la base (6) de la bande de roulement.

9. Bandage pneumatique pour roue de véhicule selon l'une des revendications 1 à 8, **caractérisé en ce que** la base de la bande de roulement présente une épaisseur de 0,5 à 5 mm et de préférence de 0,7 à 3 mm.

10. Bandage pneumatique pour roue de véhicule selon l'une des revendications 1 à 9, **caractérisé en ce que** le mélange du caoutchouc des deux parties latérales (6b) présente une teneur en charges d'au moins 50 phr et le mélange du caoutchouc de la partie centrale (6a) une teneur en charges supérieure à 55 phr.

11. Bandage pneumatique pour roue de véhicule selon l'une des revendications 1 à 10, **caractérisé en ce que** le mélange de caoutchouc des deux parties latérales (6b) et de la partie centrale (6a) contient des polymères dont la température de transition vitreuse Tg est inférieure à -55°C.
